# EUROPÄISCHE PATENTSCHRIFT

(11) **EP 2 143 362 B1**
(45) Veröffentlichungstag und Bekanntmachung des Hinweises auf die Patenterteilung: **07.09.2011**
(21) Anmeldenummer: 09008522.6
(22) Anmeldetag: 30.06.2009
(51) Int. Cl.: A47J 37/07

(54) **Vorrichtung zum Garen von Lebensmitteln**
Food cooking device
Dispositif de cuisson de produits alimentaires

(43) Veröffentlichungstag der Anmeldung: 13.01.2010
(73) Patentinhaber: Reichlin, Andreas, 6405 Immensee (CH)
(72) Erfinder: Reichlin, Andreas, 6405 Immensee (CH)
(74) Vertreter: Schaad, Balass, Menzl & Partner AG

(56) Entgegenhaltungen:
- WO-A1-2007/073061
- DE-U1- 29 515 993
- US-A- 4 749 582
- US-A- 4 788 905
- US-A- 5 893 357

## Beschreibung

Die vorliegende Erfindung betrifft eine Vorrichtung zum Garen von Lebensmitteln.

Vorrichtungen zum Garen von Lebensmitteln erfreuen sich sowohl in professionellen Küchen als auch im Freizeitsektor grosser Beliebtheit. In der Regel handelt es sich dabei um Grillgeräte, die einen Behälter umfassen, in dem das die Wärmeenergie abgebende Verbrennungsmaterial verbrannt wird, und einen Grillrost, der über dem Behälter derart angeordnet wird, dass für die Lebensmittel auf dem Grillrost die erwünschte Gartemperatur vorliegt. Bekannt sind etwa sogenannte Grillfässer, in denen der Behälter im Wesentlichen die Form einer Hohlkugel aufweist. In der Regel wird als Verbrennungsmaterial Holzkohle verwendet.

Konventionellerweise wird bei den bekannten Grillverfahren die Holzkohle in einer ersten Phase aktiv - in der Regel mittels Brennhilfen - entfacht, welche in der Folge in einer zweiten Phase verglüht. Ein Garen der Lebensmittel während der ersten Phase bietet sich in der Regel nicht an, weil es über der offenen Flamme sehr rasch verkohlt. Hinzu kommt, dass bei der Verwendung von Brennhilfen Dämpfe entstehen können, die den Geschmack der zu garenden Lebensmittel negativ beeinträchtigt und mitunter sogar leicht giftig sind. Ein Garen kommt somit erst während der zweiten Phase, d.h. während des Verglühens der Holzkohle in Frage. Dabei ist das Zeitfenster, in dem die Gartemperatur optimal ist, zeitlich relativ eng begrenzt.

In der Vergangenheit hat man diesem Problem mit sogenannten Gasgrillen Rechnung getragen, in denen ein in den Grillbehälter einströmendes, leicht brennbares Gas, wie z.B. Propan, entfacht wird und die resultierende Flamme Lavasteine erwärmt, die als Wärmespeicher dienen. Solche Gasgrille haben den Nachteil, dass sie nur mit einer Gasquelle betrieben werden können. Diese sind oft nur mühsam zu beschaffen und bergen in der Handhabung einige Sicherheitsrisiken. Hinzu kommt, dass der unvergleichliche Geschmack von Lebensmitteln, der sich aus dem Garen über verglühender Holzkohle ergibt, mit Gasgrillen nicht erreicht wird.

Aufgabe der vorliegenden Erfindung ist es somit, eine Vorrichtung zum direkten Garen von Lebensmitteln zur Verfügung zu stellen, die die bekannten Nachteile des Standes der Technik nicht aufweisen, d.h. die unter Beibehaltung der Verwendung eines Verbrennungsmaterials auf Holzbasis eine optimale Gartemperatur über ein beliebig langes Zeitfenster gewährleistet.

Eine ähnliche Aufgabe wurde in der US-A-4 788 905 gelöst.

Die Aufgabe wird erfindungsgemäss gelöst durch die Vorrichtung gemäss Anspruch 1. Bevorzugte Ausführungsformen werden in den abhängigen Ansprüchen definiert.

Unter dem Begriff "Garen" wird jede erdenkliche Zubereitungsart von Lebensmitteln verstanden, die eine Wärmezufuhr zum Lebensmittel einschliessen, insbesondere Braten oder Dämpfen.

Gemäss der vorliegenden Erfindung weist die Feuerungswanne die Form einer geschnittenen Kugel- oder Ellipsoidschale auf. Bevorzugt ist die Kugel- oder Ellipsoidschale dabei oberhalb des Äquators geschnitten, was eine optimale Wärmeverteilung gewährleistet. Überdies ergibt sich dadurch eine ästhetisch äusserst reizvolle Ausgestaltung.

Erfindungsgemäss ist die Heizfläche eine im Wesentlichen rechtwinklig zur Rotationsachse der Feuerungswanne verlaufende, durchgehende Kreisringfläche. Dabei ist die Aussenkante der Heizfläche in der Regel mit der (Schnitt-)Kante der Feuerungswanne verbunden.

In der Regel wird als Verbrennungsmaterial Holz verwendet. Durch die Ringöffnung in der Heizfläche wird gewährleistet, dass das in der Feuerungswanne angefachte Holz optimal verbrennen kann. Da das Lebensmittel auf der Heizfläche nicht unmittelbar über der offenen Flamme gegart wird, wird die Gefahr des Verkohlens selbst bei sehr hohen Gartemperaturen stark vermindert. Gleichzeitig wird aber bei der Verwendung von Holz oder Holzkohle als Verbrennungsmaterial der sich bei Grillgeräten ergebende Geschmack auch bei der vorliegenden Erfindung erhalten.

Die Heizfläche wird durch das in der Feuerungswanne verbrennende Holz einerseits von unten erwärmt und andrerseits seitlich durch die Flamme, die durch die durch den Innenkreis der Kreisringfläche definierte Öffnung lodert. Dadurch ergibt sich auf der Heizfläche ein radial nach aussen abnehmendes Temperaturgefälle. Somit liegen auf der Heizfläche gleichzeitig verschiedene Temperaturen vor, was eine hohe Flexibilität beim Garen erlaubt. Diese ist insbesondere dann von Vorteil, wenn mehrere verschiedene Lebensmittel gleichzeitig gegart werden. Zudem können bereits fertig gegarte Lebensmittel auf dem im radial äussersten, und somit am wenigsten heissen Bereich der Heizfläche warm gehalten werden, ohne dass sie verkocht würden.

Gemäss einer besonders bevorzugten Ausführungsform ist die Aussenkante der Heizfläche mit der Kante der Feuerungswanne innenwandseitig verschweisst. Dabei ist es denkbar, dass die Aussenkante der Heizfläche auf dem an die Kante der Feuerungswanne angrenzenden Bereich der Innenwand der Feuerungswanne aufliegt, oder dass alternativ dazu die Kante der Feuerungswanne auf dem an die Aussenkante der Heizfläche angrenzenden Bereich der Innenwand der Heizfläche aufliegt. Durch die durch die innenwandseitige Schweissnaht auf das Material der Heizfläche wirkende Spannung ist die Heizfläche in radialer Richtung zur Rotationsachse hin leicht nach unten geneigt. Dies gewährleistet, dass allfälliges auf die Heizfläche aufgetragenes Öl oder aus dem Gargut austretender Lebensmittelsaft in die Feuerungswanne fliesst und darin verbrennt. Eine Verschmutzung um die erfindungsgemäss Vorrichtung liegenden Grundlage wird somit vermieden. In der genannten bevorzugten Ausführungsform wird überdies die gesamte Heizfläche und das sich darauf befindende Gargut durch die Flamme beleuchtet, die durch die durch den Innenkreis der Kreisringfläche definierte Öffnung lodert, was insbesondere bei der Anwendung im Dunkeln offensichtliche Vorteile hat. Bevorzugt liegt die Neigung im Bereich von 1 bis 5°.

Zusätzliche zur innenwandseitigen Schweissnaht kann eine aussenwandseitige Schweissnaht vorgesehen sein, was die Wärmeübertragung von der Feuerungswanne auf die Heizfläche weiter optimiert.

Der Aussenradius R der Heizfläche kann alle erdenklichen Ausmasse haben, die dem Fachmann für die beschriebenen Zwecke geeignet erscheinen.

Gemäss einer weiteren bevorzugten Ausführungsform liegt der Innenradius r der Heizfläche im Bereich von 0.3 bis 1.0 m. Der Aussenradius R liegt bevorzugt im Bereich von 0.4 bis 1.5 m. Rein beispielshalber ist ein Aussenradius R von 0.6 m bzw. von 0.575 m erwähnt, da sich für diese besonders bevorzugte Resultate gezeigt haben.

Das Verhältnis des Aussenradius R zum Innenradius r im Bereich liegt bevorzugt im Bereich von 1.5:1 bis 3:1.

Als Material für die erfindungsgemässe Vorrichtung sind Stahl oder Gusseisen aufgrund ihrer hohen Wärmleitfähigkeit bevorzugt.

In der Regel ist die Feuerungswanne auf einem Ring beweglich gelagert. Aufgrund der Wölbung der Feuerungswanne kann die Ausrichtung der Heizfläche somit durch Änderung der Position der Feuerungswanne auf dem Ring einfach justiert werden.

Weiter weist die Feuerungswanne in der Regel an ihrem am tiefstliegenden Bereich eine Öffnung auf. Durch diese kann bei der Reinigung der Feuerungswanne die sich darin befindende Asche einfach abgeführt werden. Dabei wird der Durchmesser der Öffnung so gewählt, dass lediglich vollständig ausgebrannte Asche aus der Feuerungswanne fallen kann. Denkbar ist etwa ein Durchmesser der Öffnung in der Grössenordnung von 20 mm.

Weiter ist denkbar, dass eine weitere Fläche angeordnet ist, die in einer zur Ebene der Heizfläche im Wesentlichen parallel verlaufenden Ebene angeordnet ist. Durch diese zwei Flächen wird ein Heizraum mit einer sehr guten Wärmespeicherkapazität definiert, da durch die von der Heizfläche abstrahlende Wärme an der weiteren Fläche reflektiert wird. Bevorzugt weist die weitere Fläche die Form der Heizfläche, also einer Kreisringfläche auf, denkbar ist aber insbesondere auch ein entsprechendes Kreisringflächensegment.

Gemäss einer weiteren bevorzugten Ausführungsform ist in der Feuerungswanne ein Zwischenboden angeordnet, der mit der Feuerungswanne einen Wärmespeicherraum umschliesst, in dem eine Wärmespeichervorrichtung mit einem in der Wärmespeichervorrichtung enthaltenen Wärmespeichermedium angeordnet ist. So kann ein Teil der bei der Anwendung zum Garen von Lebensmitteln frei werdenden Wärmeenergie nutzbringend gespeichert werden und zum Beispiel mittels entsprechender Leitungen etwa einem Heizaggregat zugeführt werden.

Bevorzugt handelt es sich bei der Wärmespeichervorrichtung um eine Hohlspirale, da es diese erlaubt, den Wärmespeicherraum optimal 1 auszufüllen. Als Wärmespeichermedium wird in der Regel Wasser verwendet.

Die Erfindung wird anhand der Figuren weiter erläutert. Von diesen zeigt rein schematisch
Fig. eine perspektivische Ansicht einer erfindungsgemässen Vorrichtung;
Fig. 2 die Vorrichtung gemäss Fig. 1 im Querschnitt;
Fig. 3 die Vorrichtung gemäss Fig. 1 in der Seitenansicht;
Fig. 4 die Vorrichtung gemäss Fig. 1 in der Draufsicht von unten;
Fig. 5 die Vorrichtung gemäss Fig. 1 in der Draufsicht von oben; und
Fig. 6 eine perspektivische Ansicht der die Heizfläche bildenden Heizplatte der Vorrichtung gemäss Fig. 1.

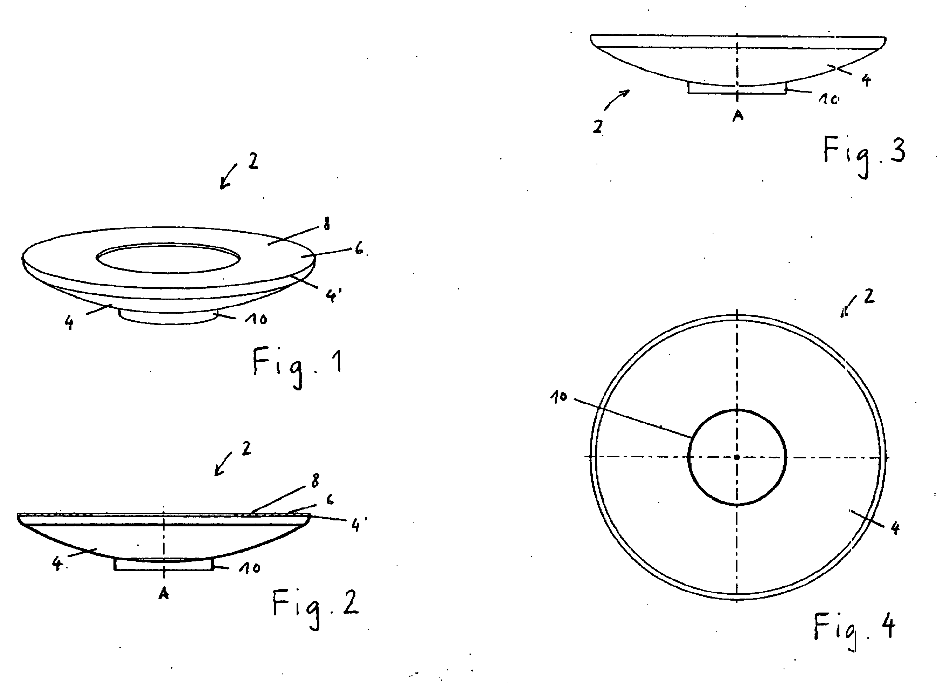

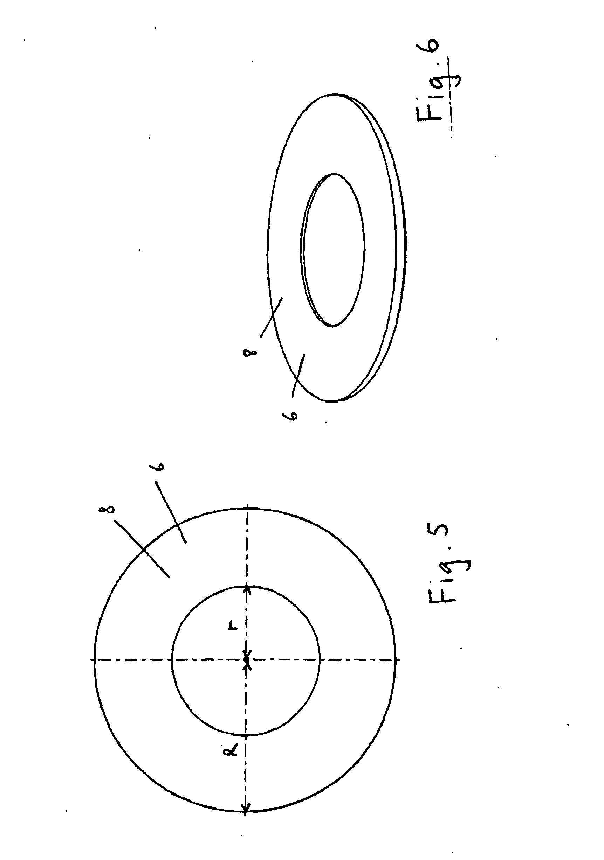

Wie aus den Figuren 1 bis 3 ersichtlich ist, weist die Vorrichtung 2 eine Feuerungswanne 4 in Form einer geschnittenen Ellipsoidschale und eine eine Heizfläche 6 bildende Heizplatte 8 auf, die bündig mit der Kante 4' der Feuerungswanne 4 verschweisst ist. Wie insbesondere Fig. 2 zeigt, verläuft die Heizfläche 6 annähernd rechtwinklig zur Rotationsachse der Feuerungswanne 4, wobei sie in radialer Richtung zur Rotationsachse A hin leicht nach unten geneigt ist. Die Heizfläche 6 ist in Form eines Kreisrings ausgebildet, wie etwa aus den Fig. 5 und 6 ersichtlich ist. Der Kreisring wird durch einen Aussenradius R und einen Innenradius r definiert.

In der gezeigten Vorrichtung ist die Feuerungswanne 4 auf einem Ring 10 beweglich gelagert. Dies erlaubt es, die Ausrichtung der Heizfläche 6 durch Änderung der Position der Feuerungswanne 4 auf dem Ring 10 einfach zu justieren. Alternativ dazu ist auch denkbar, die Feuerungswanne 4 mit dem Ring 10 zu verschweissen. In der Regel ist der Ring 10 aus demselben Material gefertigt wie die Feuerungswanne 4, namentlich aus Stahl oder Gusseisen.

## Patentansprüche

1. Vorrichtung zum Garen von Lebensmitteln umfassend
eine Feuerungswanne (4) in Form einer geschnittenen Kugel- oder Ellipsoidschale und
eine Heizfläche (6), die derart ausgestaltet ist, dass die Lebensmittel unmittelbar darauf gegart werden,
wobei die Heizfläche eine im Wesentlichen rechtwinklig zur Rotationsachse (A) der Feuerungswanne (4) verlaufende, durchgehende Kreisringfläche ist, und die Aussenkante der Heizfläche (6) mit der Schnittkante der Feuerungswanne verbunden ist.

2. Vorrichtung nach Anspruch 1, wobei die Aussenkante der Heizfläche (6) mit der Kante der Feuerungswanne (4) innenwandseitig verschweisst ist.

3. Vorrichtung nach Anspruch 1 oder 2, **dadurch gekennzeichnet, dass** die Heizfläche (6) in radialer Richtung zur Rotationsachse (A) hin nach unten geneigt ist.

4. Vorrichtung nach Anspruch 3, **dadurch gekennzeichnet, dass** die Neigung im Bereich von 1 bis 5° liegt.

5. Vorrichtung nach einem der vorhergehenden Ansprüche, **dadurch gekennzeichnet, dass** der Aussenradius R der Heizfläche (6) im Bereich von 0.4 bis 1.5 m liegt.

6. Vorrichtung nach einem der vorhergehenden Ansprüche, **dadurch gekennzeichnet, dass** der Innenradius r der Heizfläche (6) im Bereich von 0.3 bis 1.0 m liegt.

7. Vorrichtung nach einem der vorhergehenden Ansprüche, **dadurch gekennzeichnet, dass** das Verhältnis des Aussenradius R zum Innenradius r der Heizfläche (6) im Bereich von 1.5:1 bis 3:1 liegt.

8. Vorrichtung nach einem der vorhergehenden Ansprüche, **dadurch gekennzeichnet, dass** sie aus Stahl oder Gusseisen ist.

9. Vorrichtung nach einem der vorhergehenden Ansprüche, **dadurch gekennzeichnet, dass** in der Feuerungswanne (4) ein Zwischenboden angeordnet ist, der mit der Feuerungswanne einen Wärmespeicherraum umschliesst, in dem eine Wärmespeichervorrichtung mit einem in der Wärmespeichervorrichtung enthaltenen Wärmespeichermedium angeordnet ist.

10. Vorrichtung nach Anspruch 9, **dadurch gekennzeichnet, dass** die Wärmespeichervorrichtung eine Hohlspirale und das Wärmespeichermedium Wasser ist.

## Claims

1. Apparatus for cooking food products, comprising
a firebox (4) in the form of a sectioned spherical or ellipsoidal pan, and
a heating surface (6) which is designed in such a way that the food products are cooked directly on said heating surface,
with the heating surface being a continuous annular surface which runs substantially at a right angle to the rotation axis (A) of the firebox (4), and the outer edge of the heating surface (6) being connected to the cut edge of the firebox.

2. Apparatus according to Claim 1, with the outer edge of the heating surface (6) being welded to the edge of the firebox (4) at the inner wall.

3. Apparatus according to Claim 1 or 2, **characterized in that** the heating surface (6) is inclined downwards in the direction of the rotation axis (A) in the radial direction.

4. Apparatus according to Claim 3, **characterized in that** the inclination is in the range of from 1 to 5°.

5. Apparatus according to one of the preceding claims, **characterized in that** the outside radius R of the heating surface (6) is in the range of from 0.4 to 1.5 m.

6. Apparatus according to one of the preceding claims, **characterized in that** the inside radius r of the heating surface (6) is in the range of from 0.3 to 1.0 m.

7. Apparatus according to one of the preceding claims, **characterized in that** the ratio of the outside radius R to the inside radius r of the heating surface (6) is in the range of from 1.5:1 to 3:1.

8. Apparatus according to one of the preceding claims, **characterized in that** it is made of steel or cast iron.

9. Apparatus according to one of the preceding claims, **characterized in that** a false floor is arranged in the firebox (4), the said false floor enclosing a heat-storage area together with the firebox, a heat-storage apparatus with a heat-storage medium which is contained in the heat-storage apparatus being arranged in the said heat-storage area.

10. Apparatus according to Claim 9, **characterized in that** the heat-storage apparatus is a hollow coil and the heat-storage medium is water.

## Revendications

1. Dispositif de cuisson de produits alimentaires, comprenant :
un bac à feu (4) en forme de coque sphérique ou ellipsoïdale coupée, et
une surface chauffante (6), qui est configurée de telle sorte que les produits alimentaires soient cuits directement dessus,
la surface chauffante étant une surface annulaire circulaire continue, s'étendant essentiellement à angle droit par rapport à l'axe de rotation (A) du bac à feu (4), et l'arête extérieure de la surface chauffante (6) étant connectée à l'arête de coupe du bac à feu.

2. Dispositif selon la revendication 1, dans lequel l'arête extérieure de la surface chauffante (6) est soudée du côté de la paroi interne à l'arête du bac à feu (4).

3. Dispositif selon la revendication 1 ou 2, **caractérisé en ce que** la surface chauffante (6) est inclinée vers le bas vers l'axe de rotation (A) dans la direction radiale.

4. Dispositif selon la revendication 3, **caractérisé en ce que** l'inclinaison est comprise entre 1 et 5°.

5. Dispositif selon l'une quelconque des revendications précédentes, **caractérisé en ce que** le rayon extérieur R de la surface chauffante (6) est compris entre 0,4 et 1,5 m.

6. Dispositif selon l'une quelconque des revendications précédentes, **caractérisé en ce que** le rayon intérieur r de la surface chauffante (6) est compris entre 0,3 et 1,0 m.

7. Dispositif selon l'une quelconque des revendications précédentes, **caractérisé en ce que** le rapport entre le rayon extérieur R et le rayon intérieur r de la surface chauffante (6) est compris entre 1,5:1 et 3:1.

8. Dispositif selon l'une quelconque des revendications précédentes, **caractérisé en ce qu'**il est constitué d'acier ou de fonte.

9. Dispositif selon l'une quelconque des revendications précédentes, **caractérisé en ce qu'**un fond intermédiaire est disposé dans le bac à feu (4), lequel entoure avec le bac à feu un espace d'accumulation de chaleur, dans lequel est disposé un dispositif d'accumulation de chaleur avec un milieu accumulateur de chaleur contenu dans le dispositif d'accumulation de chaleur.

10. Dispositif selon la revendication 9, **caractérisé en ce que** le dispositif d'accumulation de chaleur est une spirale creuse et le milieu accumulateur de chaleur est de l'eau.
